# EUROPÄISCHE PATENTANMELDUNG

(11) **EP 1 795 787 A1**
(43) Veröffentlichungstag der Anmeldung: **13.06.2007**
(21) Anmeldenummer: 05026942.2
(22) Anmeldetag: 09.12.2005
(51) Int. Cl.: F16J 15/32

(54) **Dichtungsanordnung**

(71) Anmelder: Carl Freudenberg KG, 69469 Weinheim (DE)
(72) Erfinder: Westermann, Michael, 69253 Heiligkreuzsteinach (DE)

(57) **Zusammenfassung**

Dichtungsanordnung, umfassend einen Dichtring (1) und einen Montagering (2) zur Montage des Dichtrings (1), wobei der Dichtring (1) und der Montagering (2) eine vormontierbare Einheit (3) bilden.

## Beschreibung

### Technisches Gebiet

Die Erfindung betrifft eine Dichtungsanordnung, umfassend einen Dichtring und einen Montagering.

### Stand der Technik

Solche Dichtungsanordnungen sind allgemein bekannt, wobei der Montagering genutzt wird, den Dichtring in seinen Einbauraum zu montieren und/oder den Dichtring aus seinem Einbauraum zu demontieren. Zur Montage/Demontage des Dichtrings wird dazu ein Montagewerkzeug am Montagering angesetzt und der Dichtring beispielsweise mittels des Montagerings in seinen Einbauraum gepresst/aus seinem Einbauraum zu ziehen.
Der Dichtring und der Montagering sind jeweils separat erzeugt, werden separat voneinander gelagert und separat montiert, was im Hinblick auf ein einfaches Handling der Dichtungsanordnung wenig zufriedenstellend ist.

### Darstellung der Erfindung

Der Erfindung liegt die Aufgabe zugrunde, eine Dichtungsanordnung der eingangs genannten Art derart weiterzuentwickeln, dass sich ein vereinfachtes Handling der Dichtungsanordnung ergibt, insbesondere bei der Lagerung der Dichtungsanordnung vor deren Montage in den Einbauraum und während der Montage. Außerdem soll die Dichtungsanordnung einfach und kostengünstig herstellbar sein.

Diese Aufgabe wird erfindungsgemäß mit den Merkmalen von Anspruch 1 gelöst. Auf vorteilhafte Ausgestaltungen nehmen die Unteransprüche Bezug,

Zur Lösung der Aufgabe ist eine Dichtungsanordnung vorgesehen, umfassend einen Dichtring und einen Montagering zur Montage des Dichtrings, wobei der Dichtring und der Montagering eine vormontierbare Einheit bilden. Dabei ist von Vorteil, dass der Dichtring und der Montagering als vormontierbare Einheit zusammengefasst sind und dadurch die Lagerung und die Montage der Dichtungsanordnung wesentlich vereinfacht ist.

Der Dichtring und der Montagering sind bevorzugt axial zueinander benachbart angeordnet. Durch eine solche Anordnung wirkt die Montagekraft eines Montagewerkzeugs auf den Montagering, wobei die Kraft mittels des Montagerings auf den Dichtring übertragen wird. Unerwünscht hohe spezifische Flächenpressungen am Dichtring können dadurch vermieden werden.

Der Dichtring kann als Kassettendichtring ausgebildet sein, wobei der Kassettendichtring zumindest eine an einem Stützring festgelegte Dichtlippe umfassen kann, die eine Lauffläche eines Laufrings unter elastischer Vorspannung dichtend berührt. Kassettendichtringe sind allgemein bekannt und haben den Vorteil, dass es einer kostenaufwändigen Bearbeitung der Oberfläche des abzudichtenden Bauteils, beispielsweise einer Welle, nicht bedarf, weil die Dichtlippe auf der Lauffläche des Laufrings und nicht auf der Oberfläche des abzudichtenden Maschinenelements läuft. In fertigungstechnischer und wirtschaftlicher Hinsicht ist das von Vorteil.

Der Stützring kann einen ersten Radialflansch umfassen, an dem die Dichtlippe festgelegt ist. Die Dichtlippe, die beispielsweise aus einem elastomeren Werkstoff besteht, kann allein durch die Elastizität des Werkstoffs oder zusätzlich beispielsweise durch eine Ringwendelfeder unter elastischer Vorspannung an die Lauffläche des Laufrings angedrückt werden. Eine gute Abdichtung ist dadurch auch bei relativ zur Dichtlippe stillstehendem Laufring gegeben.

Der Laufring kann mit einem zweiten Radialflansch versehen sein, an den sich ein die Lauffläche umfassender erster Axialflansch anschließt, der sich axial in Richtung des ersten Radialflanschs erstreckt. Der Kassettendichtring weist dadurch eine kompakte Bauform auf, wobei das Innere des Kassettendichtrings weitgehend gekapselt ist und dadurch die Dichtlippe z. B. vor einer Beaufschlagung mit Verunreinigungen, die sich im abzudichtenden Medium befinden können, weitgehend geschützt ist. Gleichbleibend gute Gebrauchseigenschaften während einer langen Gebrauchsdauer werden dadurch sichergestellt.

Auf der dem zweiten Radialflansch axial abgewandten Seite des ersten Radialflanschs kann der Montagering angeordnet sein, wobei der Montagering durch eine erste Verliersicherung mit dem Dichtring verbunden ist. Durch die erste Verliersicherung wird der Zusammenhalt der vormontierbaren Einheit, bestehend aus dem Dichtring und dem Montagering gewährleistet.

Die erste Verliersicherung kann durch zumindest einen Rastnocken gebildet sein, der sich, ausgehend vom Dichtring, axial in Richtung des Montagerings erstreckt. Bevorzugt sind mehrere, zumindest drei gleichmäßig in Umfangsrichtung verteilte Rastnocken vorgesehen, die den Montagering, bezogen auf den Dichtring, sicher in seiner Position halten.

Davon abweichend kann ein Rastnocken kreisringförmig, in Umfangsrichtung in sich geschlossen ausgebildet sein.

Die Rastnocken können den Montagering radial außenseitig in axialer Richtung vollständig bedecken.

Die Rastnocken bestehen aus einem elastisch nachgiebigen Material, so dass zur Herstellung der vormontierbaren Einheit der Montagering unter elastischer Aufweitung der Rastnocken in seine Position relativ zum Dichtring gebracht wird und die Rastnocken zur verliersicheren Festlegung des Montagerings am Dichtring anschließend einrasten und dadurch wird der Montagering verliersicher und formschlüssig in seiner Position relativ zum Dichtring gehalten.

Gemäß einer vorteilhaften Ausgestaltung kann es vorgesehen sein, dass die erste Verliersicherung zumindest einen Zentriernocken für den Montagering aufweist.

Der Zentriernocken kann beispielsweise am Innenumfang des sich in axialer Richtung erstreckenden Rastnockens angeordnet sein und dadurch den Außenumfang des Montagerings unter elastischer Vorspannung anliegend berühren. Durch den Zentrietnocken sind der Dichtring und der Montagering einander konzentrisch zugeordnet.

Anstelle eines sich in Umfangsrichtung erstreckenden, in sich geschlossenen Zentriernockens können zumindest drei gleichmäßig in Umfangsrichtung verteilt angeordnete Zentriernocken vorgesehen sein, die den Montagering ebenfalls in einer Position konzentrisch zum Dichtring halten.

Die Zentriernocken berühren den Montagering nur während des Montagevorgangs außenumfangsseitig unter elastischer Vorspannung anliegend. Während des Betriebs der Dichtungsanordnung sind die Verliersicherung und der Montagering einander berührungslos zugeordnet; auch dann, wenn während der bestimmungsgemäßen Verwendung der Dichtungsanordnung der Dichtring und der Montagering einander verdrehbar zugeordnet sind, entstehen durch die berührungslose Zuordnung keine unerwünschten Reibungsverluste.

Der Dichtring kann zumindest einen Anschlagnocken für den Montagering aufweisen. Ebenso wie der Zentriernocken kann der Anschlagnocken kreisringförmig in sich geschlossen ausgebildet sein und vom ersten Radialflansch axial in Richtung des Montagerings vorstehen.

Nach einer anderen Ausgestaltung besteht die Möglichkeit, dass zumindest drei gleichmäßig in Umfangsrichtung verteilt angeordnete Anschlagnocken vorgesehen sind. Die Kraftübertragung vom Montagewerkzeug über den Montagering erfolgt auf die Anschlagnocken und von den Anschlagnocken auf den Dichtring. Durch die Anschlagnocken ergibt sich einerseits eine definierte Anlagefläche des Montagerings am Dichtring und andererseits können durch die Dimensionierung und/oder die Geometrie der Anschlagnocken empfindliche Bestandteile des Dichtrings, beispielsweise Hilfsdichtlippen, die am ersten Radialflansch angeordnet sind, vor einer Berührung mit dem Montagering während des Montagevorgangs geschützt werden.

Der Montagering ist mit seiner dem Dichtring zugewandten Stirnseite an den Anschlagnocken anlegbar.

Die Rastnocken, die Zentriernocken und die Anschlagnocken können einstückig ineinander übergehend und materialeinheitlich ausgebildet sein und aus einem elastomeren Werkstoff bestehen. Hinsichtlich einer einfachen und kostengünstigen Herstellbarkeit der Dichtungsanordnung ist das von hervorzuhebenden Vorteil; separater Verfahrensschritte zur Herstellung von Rastnocken, Zentriernocken oder Anschlagnocken bedarf es nicht; Rastnocken, Zentriernocken und Anschlagnocken können in einem Arbeitsgang hergestellt werden und sind daher herstellungsbedingt einander immer in gleicher, optimaler Weise zugeordnet.

Der Stützring kann einen sich axial entgegen den Rastnocken erstreckenden Axialvorsprung aufweisen, der außenumfangsseitig von einem Dichtwulst umschlossen ist. Der Dichtwulst bildet dabei die statische Dichtung, mit der der Dichtring in seinem Einbauraum angeordnet ist.

Der Dichtwulst, die Rastnocken, die Zentriernocken und die Anschlagnocken können einstückig ineinander übergehend und materialeinheitlich ausgebildet sein und aus elastomerem Werkstoff bestehen. Wie zuvor bereits ausgeführt, wird dadurch eine einfache und kostengünstige Herstellbarkeit sichergestellt, ebenso wie eine genaue Zuordnung der einzelnen Teile zueinander.

Der erste Radialflansch kann auf der dem Montagering zugewandten Stirnseite von einer elastomeren Werkstoffschicht überdeckt sein. Durch die Werkstoffschicht wird der erste Radialflansch, der Bestandteil des Stützrings ist, vor äußeren Einflüssen geschützt. Der Stützring besteht zumeist aus einem metallischen Werkstoff. Die elastomere Werkstoffschicht dient in einem solchen Fall, ggf. zusammen mit dem Anschlagnocken, nicht nur als Anlagefläche für den Montagering bei Montage der Dichtungsanordnung, sondern auch als Korrosionsschutz für den Stützring.

Bevorzugt sind die Werkstoffschicht und die Anschlagnocken material einheitlich und einstückig ausgebildet, wodurch ebenfalls eine einfache und kostengünstige Herstellbarkeit sichergestellt wird.

Der erste Radialflansch kann radial innenseitig eine erste Hilfsdichtlippe aufweisen, die die Lauffläche dichtend berührt und der Dichtlippe funktionstechnisch nachgeschaltet ist. Die erste Hilfsdichtlippe hält Leckagen, die die Dichtlippe passieren, von der Umgebung fern.

Zusätzlich oder alternativ kann der Dichtlippe funktionstechnisch eine zweite Hilfsdichtlippe vorgeschaltet sein, die den zweiten Radialflansch auf der dem ersten Radialflansch zugewandten Seite dichtend berührt. Die zweite Hilfsdichtlippe hat hauptsächlich die Aufgabe, Schwebstoffe im abzudichtenden Medium von der Dichtlippe fernzuhalten, so dass die Dichtungsanordnung insgesamt gleich bleibend gute Gebrauchseigenschaften während einer langen Gebrauchsdauer aufweist.

Auch der Kassettendichtring kann eine Verliersicherung aufweisen, um seine Bestandteile bei Lagerung und Montage zusammenzuhalten. Der Stützring und der Laufring können durch eine zweite Verliersicherung miteinander verbunden sein, wobei die zweite Verliersicherung durch eine formschlüssige Verbindung gebildet ist.

Die zweite Verliersicherung kann durch eine erste Rastnase am Stützring und eine zweite Rastnase am Laufring gebildet sein, die parallel zueinander angeordnet und formschlüssig aneinander anlegbar sind.

Nach einer ersten Ausgestaltung können die Rastnasen jeweils eine Anschlagfläche aufweisen, die in radialer Richtung senkrecht zur Rotationsachse ausgebildet ist.

Hierbei ist von Vorteil, dass die zweite Verliersicherung besonders haltbar ist und auch vergleichsweise hohe Axialkräfte sicher aufnehmen kann.

Nach einer anderen Ausgestaltung können die Rastnasen jeweils eine Anschlagfläche aufweisen, die mit der Rotationsachse jeweils einen Winkel einschließen, der 30° bis 60° beträgt. Bevorzugt beträgt der Winkel 45°. Hierbei ist von Vorteil, dass die Montage/Demontage des Kassettendichtrings vergleichsweise einfach erfolgen kann, da die schrägen Anschlagflächen als Auflaufschrägen ausgebildet sind. Die Rastnasen werden bei Montage/Demontage des Kassettendichtrings jeweils durch elastische Verformung aneinander vorbeibewegt.

Die Rastnasen bestehen bevorzugt aus einem elastomeren Werkstoff. Die Dichtungsanordnung ist dadurch einfach und kostengünstig herstellbar, da die zweite Verliersicherung keine metallischen Bauteile enthält, die beispielsweise in separaten Verfahrensschritten zur Erzielung der Verliersicherung umgeformt werden müssen.

Die erste Rastnase ist bevorzugt einstückig und materialeinheitlich mit den Rastnocken, den Zentriemocken, den Anschlagnocken und dem Dichtwulst ausgebildet. Durch die Zusammenfassung all dieser Teile ist die Dichtungsanordnung trotz ihrer vielfältigen Funktionen einfach und kostengünstig herstellbar.

Das Verhältnis aus axialem Abstand zwischen Rastnocken und Anschlagnocken zur Dicke des Montagerings beträgt bevorzugt 1,1 bis 1,5, weiter bevorzugt 1,25. Eine solche Ausgestaltung bedingt während der bestimmungsgemäßen Verwendung des Dichtrings axiales Spiel des Montagerings zwischen dem Rastnocken und den Anschlagnocken bei gleichzeitig kompakten Abmessungen der Dichtungsanordnung in axialer Richtung.

### Kurzbeschreibung der Zeichnungen

Zwei Ausführungsbeispiele der erfindungsgemäßen Dichtungsanordnung werden nachfolgend anhand der Figuren 1 bis 3 näher erläutert.

Diese zeigen jeweils in schematischer Darstellung:
- Fig. 1: ein erstes Ausführungsbeispiel der erfindungsgemäßen Dichtungsanordnung während ihrer Montage,
- Fig. 2: ein zweites Ausführungsbeispiel der erfindungsgemäßen Dichtungsanordnung während ihrer Montage, wobei die zweite Verliersicherung abweichend von der zweiten Verliersicherung aus Fig. 1 dargestellt ist,
- Fig. 3: einen Ausschnitt der beiden Ausführungsbeispiele aus den Figuren 1 und 2 während der bestimmungsgemäßen Verwendung der Dichtungsanordnung nach ihrer Montage.

### Ausführung der Erfindung

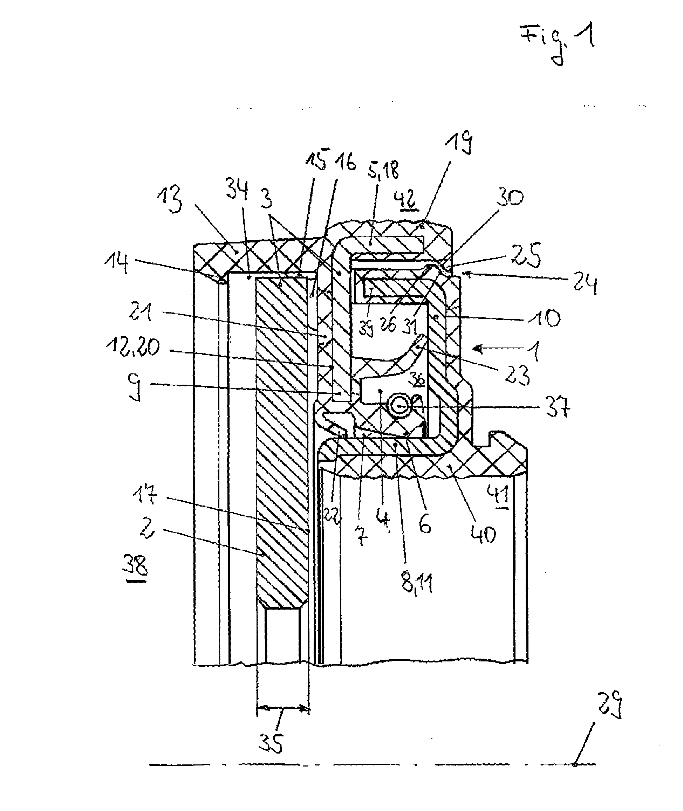

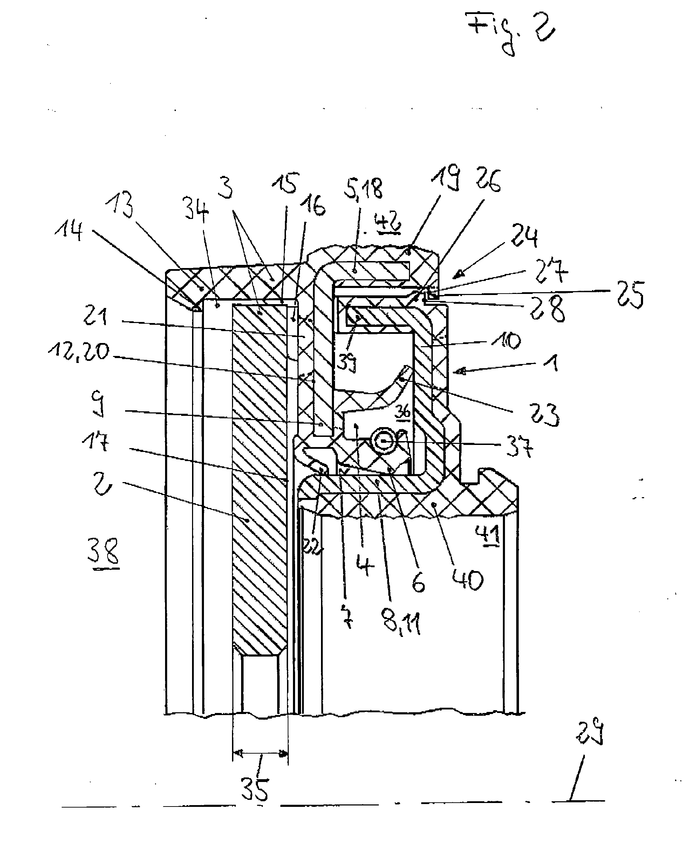

In den Figuren 1 und 2 ist jeweils eine Dichtungsanordnung gezeigt, bei der ein Dichtring 1 und ein Montagering 2 eine vormontierbare Einheit 3 bilden.

Der Dichtring 1 ist als Kassettendichtring 4 ausgebildet und besteht aus einem - im Längsschnitt betrachtet - L-förmigen Stützring 5, der bevorzugt aus einem metallischen Werkstoff besteht. Der Stützring 5 weist radial innenseitig eine axial in Richtung des abzudichtenden Raums 36 vorstehende Dichtlippe 6 auf, die in den hier gezeigten Ausführungsbeispielen jeweils radial außenumfangsseitig von einer Ringwendelfeder 37 umschlossen ist.
Ebenfalls radial innenseitig am ersten Radialflansch 9 des Stützrings 5 ist die erste Hilfsdichtlippe 22 angeordnet, die der Dichtlippe 6 funktionstechnisch nachgeschaltet ist und die Lauffläche 7 dichtend umschließt.
Der Dichtlippe 6 funktionstechnisch vorgeschaltet ist die zweite Hilfsdichtlippe 23, die den zweiten Radialflansch 10 des Laufrings 8 dichtend berührt. Ferner umfasst der Stützring 5 einen Axialvorsprung 18, der radial außenumfangsseitig vom Dichtwulst 19 aus elastomerem Werkstoff umschlossen ist, wobei der Dichtwulst 19 den Einbauraum des Kassettendichtrings 4 gegenüber der Umgebung 38 abdichtet.

Außerdem umfasst der Kassettendichtring den Laufring 8, der im Wesentlichen C-förmig, axial in Richtung des Montagerings 2 offen gestaltet ist. Der Laufring 8 setzt sich aus dem ersten Axialflansch 11 zusammen, der die Lauffläche 7 bildet und dem zweiten Radialflansch 10, wobei sich radial außenumfangsseitig an den zweiten Radialflansch 10 ein weiterer Axialvorsprung 39 anschließt, axial in Richtung des ersten Radialflanschs 9. Der Axialflansch 11 umschließt eine Dichtspur 40 außenumfangsseitig, wobei die Dichtspur 40 ein abzudichtendes Maschinenelement 41, beispielsweise eine Welle, außenumfangsseitig statisch dichtend umschließt.
Das Maschinenelement 41, die Dichtspur 40 und der Laufring 8 sind relativ drehfest miteinander verbunden, ebenso wie das hier symbolisch angedeutete Gehäuse 42 mit dem Dichtwulst 19 und dem Stützring 5.

Der Stützring 5 und der Laufring 8 sind demgegenüber drehbeweglich zueinander angeordnet.

Zur Montage des Dichtrings 1 ist der Montagering 2 vorgesehen. Auf der dem zweiten Radialflansch 10 axial abgewandten Seite 12 des ersten Radialflanschs 9 befindet sich dieser Montagering 2, wobei der Montagering 2 durch die erste Verliersicherung 13 mit dem Dichtring 1 verbunden ist. Die erste Verliersicherung 13 ist durch einen kreisringförmigen, in sich geschlossenen Rastnocken 14 gebildet, der sich vom Dichtring 1 axial in Richtung des Montagerings 2 erstreckt und diesen radial außenseitig in axialer Richtung vollständig überdeckt. Die erste Verliersicherung 13 besteht aus einem elastomeren Werkstoff und ist einstückig und materialeinheitlich mit den Zentriernocken und den Anschlagnocken verbunden, die ebenfalls aus einem elastomeren Werkstoff bestehen und gleichmäßig in Umfangsrichtung verteilt angeordnet sind. Im hier gezeigten Ausführungsbeispiel gelangen jeweils zumindest drei Zentriernocken 15 und zumindest drei Anschlagnocken 16 zur Anwendung.

Eine zweite Verliersicherung 24 bewirkt, dass der Kassettendichtring 4 zusammengehalten wird. Die zweite Verliersicherung 24 wird durch eine erste Rastnase 25 und eine zweite Rastnase 26 gebildet, wobei die erste Rastnase 25 Bestandteil des Stützrings 5 und die zweite Rastnase 26 Bestandteil des Laufrings 8 ist. Die erste Rastnase 25 ist einstückig und materialeinheitlich mit den Rastnocken 14, 14.1, 14.2, 14.3, den Zentriernocken 15, 15.1, 15.2, 15.3, den Anschlagnocken 16, 16.1, 16.2, 16.3 und dem Dichtwulst 19 ausgebildet, so dass sich insgesamt eine einfache und kostengünstige Herstellbarkeit der Dichtungsanordnung ergibt. Das Verhältnis aus axialem Abstand zwischen Rastnocken 14, 14.1, 14.2, 14.3, und Anschlagnocken 16, 16.1, 16.2, 16.3 zur Dicke 35 des Montagerings 2 beträgt im hier gezeigten Ausführungsbeispiel 1,25.

In Fig. 1 haben die Rastnasen 25, 26 jeweils Anschlagflächen 27, 28, die senkrecht zur Rotationsachse 29 ausgerichtet sind.

In Fig. 2 ist die zweite Verliersicherung 24 abweichend von der zweiten Verliersicherung 24 aus Fig. 1 dargestellt. Die Rastnasen 25, 26 weisen ebenfalls jeweils eine Anschlagfläche 30, 31 auf, wobei die Anschlagflächen 30, 31 mit der Rotationsachse 29 jeweils einen Winkel 32, 33 einschließen, der im hier gezeigten Ausführungsbeispiel jeweils 45° beträgt.
Die Rastnasen 25, 26 bestehen aus einem elastomeren Werkstoff.

In den Figuren 1 und 2 ist die Position des Montagerings 2 vor und während der Montage des Dichtrings 1 gezeigt. Der Montagering 2 liegt mit seiner dem Dichtring 1 zugewandten Stirnseite 17 an den Anschlagnocken 16, 16.1, 16.2, 16.3 unter elastischer Vorspannung an und wird von den Zentriernocken 15, 15.1, 15.2, 15.3, außenumfangsseitig unter radialer Vorspannung elastisch nachgiebig zentriert.

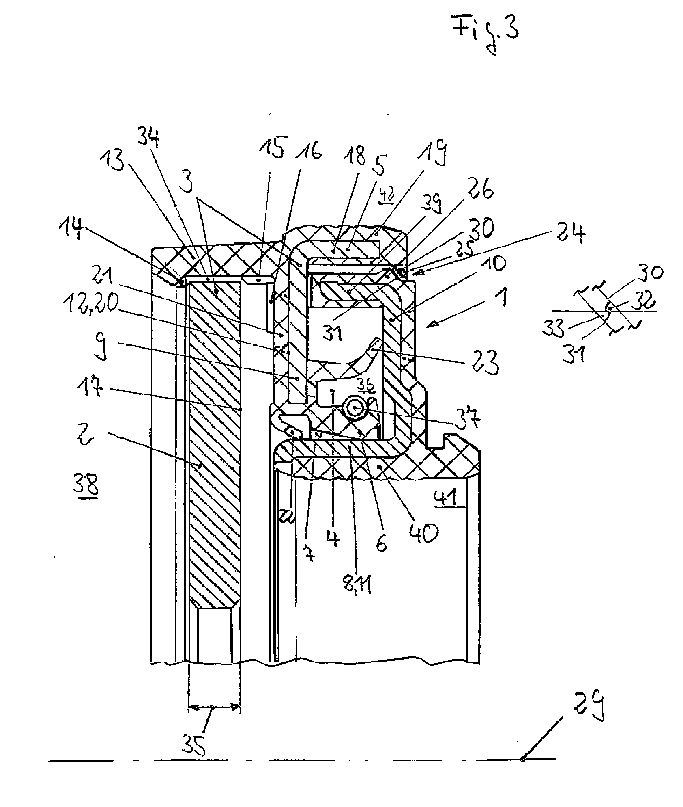

In Fig. 3 ist ein Ausschnitt aus den Ausführungsbeispielen gemäß der Figuren 1 und 2 gezeigt.
In Fig. 3 ist der Montagering 2 demgegenüber, bezogen auf den Dichtring 1, nach der Montage des Dichtrings 1 gezeigt. Es ist zu erkennen, dass der Dichtring 1 und der Montagering 2 einander berührungslos zugeordnet sind und dass der Montagering 2 in axialer Richtung einerseits zu den Anschlagnocken 16, 16.1, 16.2, 16.3 und in axialer Richtung andererseits zu den Rastnocken 14, 14.1, 14.2, 14.3 jeweils einen axialen Abstand 34 benachbart zugeordnet ist.

## Patentansprüche

1. Dichtungsanordnung, umfassend einen Dichtring (1) und einen Montagering (2) zur Montage des Dichtrings (1), wobei der Dichtring (1) und der Montagering (2) eine vormontierbare Einheit (3) bilden.

2. Dichtungsanordnung nach Anspruch 1, **dadurch gekennzeichnet, dass** der Dichtring (1) und der Montagering (2) axial zueinander benachbart angeordnet sind.

3. Dichtungsanordnung nach einem der Ansprüche 1 oder 2, **dadurch gekennzeichnet, dass** der Dichtring (1) als Kassettendichtring (4) ausgebildet ist.

4. Dichtungsanordnung nach Anspruch 3, **dadurch gekennzeichnet, dass** der Kassettendichtring (4) zumindest eine an einem Stützring (5) festgelegte Dichtlippe (6) umfasst, die eine Lauffläche (7) eines Laufrings (8) unter elastischer Vorspannung dichtend berührt.

5. Dichtungsanordnung nach Anspruch 4, **dadurch gekennzeichnet, dass** der Stützring (5) einen ersten Radialflansch (9) umfasst.

6. Dichtungsanordnung nach einem der Ansprüche 4 oder 5, **dadurch gekennzeichnet, dass** der Laufring (8) einen zweiten Radialflansch (10) umfasst, an den sich ein die Lauffläche (7) umfassender erster Axialflansch (11) anschließt, der sich axial in Richtung des ersten Radialflanschs (9) erstreckt.

7. Dichtungsanordnung nach einem der Ansprüche 1 bis 6, **dadurch gekennzeichnet, dass** auf der dem zweiten Radialflansch (10) axial abgewandten Seite (12) des ersten Radialflanschs (9) der Montagering (2) angeordnet ist und dass der Montagering (2) durch eine erste Verliersicherung (13) mit dem Dichtring (1) verbunden ist.

8. Dichtungsanordnung nach Anspruch 7, **dadurch gekennzeichnet, dass** die erste Verliersicherung (13) durch zumindest einen Rastnocken (14, 14.1, 14.2, 14.3) gebildet ist, der sich, ausgehend vom Dichtring (1), axial in Richtung des Montagerings (2) erstreckt.

9. Dichtungsanordnung nach Anspruch 7, **dadurch gekennzeichnet, dass** zumindest drei gleichmäßig in Umfangsrichtung verteilt angeordnete Rastnocken (14, 14.1, 14.2, 14.3) vorgesehen sind.

10. Dichtungsanordnung nach einem der Ansprüche 8 oder 9, **dadurch gekennzeichnet, dass** die Rastnocken (14, 14.1, 14.2, 14.3) den Montagering (2) radial außenseitig in axialer Richtung vollständig überdecken

11. Dichtungsanordnung nach einem der Ansprüche 7 bis 10, **dadurch gekennzeichnet, dass** die erste Verliersicherung (13) zumindest einen Zentriernocken (15, 15.1, 15.2, 15.3) für den Montagering (2) aufweist.

12. Dichtungsanordnung nach Anspruch 11, **dadurch gekennzeichnet, dass** zumindest drei gleichmäßig in Umfangsrichtung verteilt angeordnete Zentriernocken (15, 15.1, 15.2, 15.3.) vorgesehen sind.

13. Dichtungsanordnung nach einem der Ansprüche 11 oder 12, **dadurch gekennzeichnet, dass** die Zentriernocken (15, 15.1, 15.2, 15.3) den Montagering (2) nur während des Montagevorgangs außenumfangsseitig unter elastischer Vorspannung anliegend berühren.

14. Dichtungsanordnung nach einem der Ansprüche 1 bis 13, **dadurch gekennzeichnet, dass** der Dichtring (1) zumindest einen Anschlagnocken (16, 16.1, 16.2, 16.3) für den Montagering (2) aufweist.

15. Dichtungsanordnung nach Anspruch 14, **dadurch gekennzeichnet, dass** zumindest drei gleichmäßig in Umfangsrichtung verteilt angeordnete Anschlagnocken (16, 16.1, 16.2, 16.3) vorgesehen sind.

16. Dichtungsanordnung nach einem der Ansprüche 1 bis 15, **dadurch gekennzeichnet, dass** der Montagering (2) mit seiner dem Dichtring (1) zugewandten Stirnseite (17) an die Anschlagnocken (16, 16.1, 16.2, 16.3) anlegbar ist.

17. Dichtungsanordnung nach einem der Ansprüche 8 bis 16, **dadurch gekennzeichnet, dass** die Rastnocken (14, 14.1, 14.2, 14.3), die Zentriernocken (15, 15.1, 15.2, 15.3) und die Anschlagnocken (16, 16.1, 16.2, 16.3) einstückig ineinander übergehend und materialeinheitlich ausgebildet sind und aus elstomerem Werkstoff bestehen.

18. Dichtungsanordnung nach einem der Ansprüche 4 bis 17, **dadurch gekennzeichnet, dass** der Stützring (5) einen sich axial entgegen die Rastnocken (14, 14,1, 14.2, 14.3) erstreckenden Axialvorsprung (18) aufweist, der außenumfangsseitig von einem Dichtwulst (19) umschlossen ist.

19. Dichtungsanordnung nach einem der Ansprüche 8 bis 18, **dadurch gekennzeichnet, dass** der Dichtwulst (19), die Rastnocken (14, 14.1, 14.2, 14.3), die Zentriernocken (15, 15.1, 15.2, 15.3) und die Anschlagnocken (16, 16.1, 16.2, 16.3) einstückig ineinander übergehend und materialeinheitlich ausgebildet sind und aus elastomerem Werkstoff bestehen.

20. Dichtungsanordnung nach einem der Ansprüche 1 bis 19, **dadurch gekennzeichnet, dass** der erste Radialflansch (9) auf der dem Montagering (2) zugewandten Stirnseite (20) von einer elastomeren Werkstoffschicht (21) überdeckt ist.

21. Dichtungsanordnung nach Anspruch 20, **dadurch gekennzeichnet, dass** die Werkstoffschicht (21) und die Anschlagnocken (16, 16.1, 16.2, 16.3) materialeinheitlich und einstückig ausgebildet sind.

22. Dichtungsanordnung nach einem der Ansprüche 1 bis 21, **dadurch gekennzeichnet, dass** der erste Radialflansch (9) radial innenseitig eine erste Hilfsdichtlippe (22) aufweist, die die Lauffläche (7) dichtend berührt und der Dichtlippe (6) funktionstechnisch nachgeschaltet ist.

23. Dichtungsanordnung nach einem der Ansprüche 1 bis 22, **dadurch gekennzeichnet, dass** der Dichtlippe (6) funktionstechnisch eine zweite Hilfsdichtlippe (23) vorgeschaltet ist, die den zweiten Radialflansch (10) auf der dem ersten Radialflansch (9) zugewandten Seite dichtend berührt.

24. Dichtungsanordnung nach einem der Ansprüche 1 bis 23, **dadurch gekennzeichnet, dass** der Stützring (5) und der Laufring (8) durch eine zweite Verliersicherung (24) miteinander verbunden sind, wobei die zweite Verliersicherung (24) durch eine formschlüssige Verbindung gebildet ist.

25. Dichtungsanordnung nach Anspruch 24, **dadurch gekennzeichnet, dass** die zweit Verliersicherung (24) durch eine erste Rastnase (25) am Stützring (5) und eine zweite Rastnase (26) am Laufring (8) gebildet ist, die parallel zueinander angeordnet und formschlüssig aneinander anlegbar sind.

26. Dichtungsanordnung nach Anspruch 25, **dadurch gekennzeichnet, dass** die Rastnasen (25, 26) jeweils eine Anschlagfläche (27, 28) aufweisen, die in radialer Richtung senkrecht zur Rotationsachse (29) ausgereichtet sind.

27. Dichtungsanordnung nach Anspruch 25, **dadurch gekennzeichnet, dass** die Rastnasen (25, 26) jeweils eine Anschlagfläche (30, 31) aufweisen, die mit der Rotationsachse (29) jeweils einen Winkel (32, 33) einschließen, der 30° bis 60° beträgt.

28. Dichtungsanordnung nach einem der Ansprüche 25 bis 27, **dadurch gekennzeichnet, dass** die Rastnasen (25, 26) aus einem elastomeren Werkstoff bestehen.

29. Dichtungsanordnung nach einem der Ansprüche 1 bis 28, **dadurch gekennzeichnet, dass** die erste Rastnase (25) einstückig und materialeinheitlich mit den Rastnocken (14, 14.1, 14.2, 14.3), den Zentriernocken (15, 15.1, 15.2, 15.3), den Anschlagnocken (16, 16.1, 16.2, 16.3) und dem Dichtwulst (19) ausgebildet ist.

30. Dichtungsanordnung nach einem der Ansprüche 1 bis 28, **dadurch gekennzeichnet, dass** das Verhältnis aus axialem Abstand (34) zwischen Rastnocken (14, 14.1, 14.2, 14.3) und Anschlagnocken (16, 16.1, 16.2, 16.3) zur Dicke (35) des Montagerings (2) 1,1 bis 1,5 beträgt.
